# EUROPÄISCHE PATENTSCHRIFT

(11) **EP 4 335 247 B1**
(45) Veröffentlichungstag und Bekanntmachung des Hinweises auf die Patenterteilung: **11.06.2025**
(21) Anmeldenummer: 22725842.3
(22) Anmeldetag: 27.04.2022
(51) Int. Cl.: H05B 6/06, H05B 6/12

(54) **INDUKTIONSENERGIEVERSORGUNGSVORRICHTUNG**
INDUCTION ENERGY SUPPLY DEVICE
DISPOSITIF D'ALIMENTATION EN ÉNERGIE PAR INDUCTION

(30) Priorität: 03.05.2021 EP 21382393
(43) Veröffentlichungstag der Anmeldung: 13.03.2024
(73) Patentinhaber: BSH Hausgeräte GmbH, 81739 München (DE)
(72) Erfinder: LASOBRAS BERNAD, Javier, 50016 Ejea de los Caballeros (Zaragoza) (ES); LLORENTE GIL, Sergio, 50009 Zaragoza (ES); MOYA NOGUES, Jesus Manuel, 50001 Zaragoza (ES); PASCUAL AZA, Jorge, 50018 Zaragoza (ES); SERRANO TRULLEN, Javier, 50017 Zaragoza (ES); TESA BETES, Jorge, 50018 Zaragoza (ES)
(86) Internationale Anmeldenummer: PCT/EP2022/061134
(87) Internationale Veröffentlichungsnummer: WO 2022/233654

(56) Entgegenhaltungen:
- EP-B1- 2 380 394
- DE-A1- 102012 206 940
- JP-A- 2006 114 320
- JP-A- 2010 009 795
- JP-B2- 4 310 293
- JP-B2- 4 570 580
- US-A1- 2020 359 468

## Beschreibung

Die Erfindung betrifft eine Induktionsenergieversorgungsvorrichtung nach dem Oberbegriff des Anspruchs 1, ein Induktionsenergieübertragungssystem nach Anspruch 10 und ein Verfahren zum Betrieb einer Induktionsenergieversorgungsvorrichtung nach dem Oberbegriff des Anspruchs 13.

Aus dem Stand der Technik sind bereits Induktionsenergieversorgungsvorrichtungen zur induktiven Übertragung von Energie von einer Primärspule einer Versorgungseinheit auf eine Sekundärspule einer Aufstelleinheit bekannt. Beispielsweise wird in der Druckschrift US 3,761,668 A ein Induktionskochfeld vorgeschlagen, welches neben einer induktiven Beheizung von Gargeschirr auch zu einer Energieversorgung von Haushaltskleingeräten, beispielsweise einem Mixer, vorgesehen ist. Eine induktiv durch eine Primärspule des Induktionskochfelds bereitgestellte Energie wird dabei teilweise auf eine in dem Haushaltskleingerät integrierte Sekundärspule übertragen.

Bekanntermaßen können verschiedene Aufstelleinheiten, insbesondere unterschiedliche Typen von Haushaltskleingeräten, große Unterschiede in ihrem jeweiligen Leistungsbedarf aufweisen. Je nach benötigter Leistung der Aufstelleinheit muss eine Schaltfrequenz von Wechselrichtern zum Betrieb der Versorgungseinheit variiert werden, wobei ein Ausmaß von in dem Betrieb auftretenden Schaltverlusten der Wechselrichter, neben der Schaltfrequenz selbst, insbesondere auch von einer Konfiguration von mit den Wechselrichtern verbundenen Snubber-Kondensatoren abhängig ist. So treten bei bisher bekannten Induktionsenergieversorgungsvorrichtungen im Falle eines Betriebs von Aufstelleinheiten mit einem geringen Leistungsbedarf von bis zu 500 Watt sehr hohe Schaltverluste auf, sodass hierdurch nachteilig nur eine sehr geringe Energieeffizienz erreicht werden kann. Hinzu kommt, dass viele bekannte Induktionsenergieversorgungsvorrichtungen, beispielsweise herkömmliche Induktionskochfelder, aufgrund ihrer festgelegten Konfiguration der Snubber-Kondensatoren einen Betrieb von Aufstelleinheiten nur in einem sehr begrenzten Leistungsbereich ermöglichen. Dies begründet sich dadurch, dass aufgrund der Konfiguration der Snubber-Kondensatoren bestimmte Schaltfrequenzen nicht über- oder unterschritten werden können, da die Snubber-Kondensatoren während eines Schaltzyklus ansonsten nicht vollständig geladen beziehungsweise entladen werden.

Hierdurch ist eine Flexibilität hinsichtlich eines Betriebs verschiedener Aufstelleinheiten bei bisher bekannten Induktionsenergieversorgungsvorrichtungen nachteilig stark eingeschränkt. Die Dokumente EP 2 380 394 B1, DE 10 2012 206940 A1 und JP 2006 114320 A offenbaren weitere Induktionsenergieversorgungsvorrichtungen nach dem Stand der Technik mit Snubber-Einheiten mit Snubber-Kapazitoren, wobei diese Kapazitoren einstellbar sind.

Die Aufgabe der Erfindung besteht insbesondere, aber nicht beschränkt darauf, darin, eine gattungsgemäße Vorrichtung mit verbesserten Eigenschaften hinsichtlich einer Effizienz bereitzustellen. Die Aufgabe wird erfindungsgemäß durch die Merkmale der Ansprüche 1, 10 und 13 gelöst, während vorteilhafte Ausgestaltungen und Weiterbildungen der Erfindung den Unteransprüchen entnommen werden können.

Die Erfindung geht aus von einer Induktionsenergieversorgungsvorrichtung, mit einer Versorgungseinheit, welche zumindest ein Versorgungsinduktionselement zur induktiven Bereitstellung von Energie an eine Aufstelleinheit aufweist, mit einer Wechselrichtereinheit zum Betrieb des Versorgungsinduktionselements, mit einer der Wechselrichtereinheit zugeordneten Snubber-Einheit, welche eine Mehrzahl von Snubber-Kondensatoren aufweist, und mit einer Steuereinheit zur Steuerung der Wechselrichtereinheit.

Es wird vorgeschlagen, dass die Steuereinheit ein Datenempfangselement zu einem drahtlosen Empfang zumindest eines Betriebsparameters von der Aufstelleinheit aufweist und dazu vorgesehen ist, eine Einstellung der Snubber-Einheit basierend auf dem Betriebsparameter anzupassen.

Durch eine derartige Ausgestaltung kann vorteilhaft eine Induktionsenergieversorgungsvorrichtung mit einer besonders hohen Effizienz bereitgestellt werden. Es kann insbesondere eine Energieeffizienz vorteilhaft gesteigert werden, indem in der Wechselrichtereinheit auftretende Schaltverluste, durch die Einstellung der Snubber-Einheit basierend auf dem Betriebsparameter, reduziert, vorzugsweise minimiert werden können. Zudem kann vorteilhaft eine Flexibilität erhöht werden, indem ein besonders effizienter Betrieb verschiedenster Aufstelleinheiten mit jeweils unterschiedlichen Leistungsanforderungen ermöglicht ist. Es können insbesondere Aufstelleinheiten mit geringen Leistungsanforderungen im Bereich von wenigen Hundert Watt besonders effizient betrieben werden, was mit aus dem Stand der Technik bekannten Induktionsenergieversorgungsvorrichtungen bisher nicht möglich war. Ferner kann vorteilhaft ein Bedienkomfort für Nutzer gesteigert werden, da der Betriebsparameter drahtlos durch das Datenempfangselement empfangen werden kann und eine automatische Anpassung der Einstellung der Snubber-Einheit durch die Steuereinheit basierend auf dem Betriebsparameter ermöglicht ist, sodass händische Einstellungen durch den Nutzer vorteilhaft entfallen.

Die Induktionsenergieversorgungsvorrichtung weist zumindest eine Hauptfunktionalität in Form einer drahtlosen Energieübertragung, insbesondere in einer drahtlosen Energieversorgung von Aufstelleinheiten, auf. Die Induktionsenergieversorgungsvorrichtung kann als ein Teil eines Induktionsenergieversorgungssystems ausgebildet sein. In einer vorteilhaften Ausgestaltung ist die Induktionsenergieversorgungsvorrichtung als eine Induktionsgarvorrichtung mit zumindest einer von einer reinen Garfunktion abweichenden weiteren Hauptfunktion, insbesondere zumindest einer Energieversorgung und einem Betrieb von Haushaltskleingeräten, ausgebildet. Beispielsweise könnte die Induktionsenergieversorgungsvorrichtung als eine Induktionsbackofenvorrichtung und/oder als eine Induktionsgrillvorrichtung ausgebildet sein. Insbesondere könnte die Versorgungseinheit als Teil eines Induktionsbackofens und/oder als Teil eines Induktionsgrills ausgebildet sein. Vorzugsweise ist die als Induktionsgarvorrichtung ausgebildete Induktionsenergieversorgungsvorrichtung als ein Induktionskochfeld ausgebildet. Die Versorgungseinheit ist dann insbesondere als Teil eines Induktionskochfelds ausgebildet. In einer weiteren vorteilhaften Ausgestaltung ist die Induktionsenergieversorgungsvorrichtung als eine Küchenenergieversorgungsvorrichtung ausgebildet und kann neben einer Hauptfunktion in Form einer Energieversorgung und eines Betriebs von Haushaltskleingeräten zusätzlich zur Bereitstellung von Garfunktionen vorgesehen sein.

Unter einer "Versorgungseinheit" soll eine Einheit verstanden werden, welche in wenigstens einem Betriebszustand induktiv Energie bereitstellt und welche insbesondere eine Hauptfunktionalität in Form einer Energiebereitstellung aufweist. Zu der Bereitstellung von Energie weist die Versorgungseinheit zumindest ein Versorgungsinduktionselement auf, welches insbesondere zumindest eine Spule, insbesondere zumindest eine Primärspule, aufweist und/oder als eine Spule ausgebildet ist und welches insbesondere in dem Betriebszustand induktiv Energie bereitstellt. Die Versorgungseinheit könnte zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche in dem Betriebszustand jeweils induktiv Energie bereitstellen könnten, und zwar insbesondere an ein einziges Aufnahmeinduktionselement oder an zumindest zwei oder mehrere Aufnahmeinduktionselemente zumindest einer Aufstelleinheit und/oder zumindest einer weiteren Aufstelleinheit. Zumindest ein Teil der Versorgungsinduktionselemente könnten in einem Nahbereich zueinander, beispielsweise in einer Reihe und/oder in Form einer Matrix, angeordnet sein.

Unter einer "Aufstelleinheit" soll eine Einheit verstanden werden, welche in wenigstens einem Betriebszustand induktiv Energie empfängt und die induktiv empfangene Energie zumindest teilweise in zumindest eine weitere Energieform zur Bereitstellung zumindest einer Hauptfunktion umwandelt. Beispielsweise könnte die von der Aufstelleinheit induktiv empfangene Energie in dem Betriebszustand, insbesondere direkt, in zumindest eine weitere Energieform umgewandelt werden, wie beispielsweise in Wärme. Alternativ oder zusätzlich könnte die Aufstelleinheit zumindest einen elektrischen Verbraucher, beispielsweise einen Elektromotor oder dergleichen, aufweisen. Die Aufstelleinheit weist zumindest ein Aufnahmeinduktionselement zu dem Empfang der induktiv bereitgestellten Energie auf. Die Aufstelleinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie, insbesondere von dem Versorgungsinduktionselement, empfangen könnten. Die Aufstelleinheit könnte beispielsweise als ein Gargeschirr ausgebildet sein. Das Gargeschirr weist vorzugsweise zumindest einen Lebensmittelaufnahmeraum auf und wandelt die induktiv empfangene Energie in dem Betriebszustand zumindest teilweise in Wärme zu einer Beheizung von in dem Lebensmittelaufnahmeraum angeordneten Lebensmitteln um. Vorzugsweise weist die als Gargeschirr ausgebildete Aufstelleinheit zumindest eine weitere Einheit, zu einer Bereitstellung zumindest einer weiteren Funktion, welche über eine reine Beheizung von Lebensmitteln hinausgeht und/oder von einer Beheizung von Lebensmitteln abweicht, auf. Beispielsweise könnte die weitere Einheit als ein Temperatursensor oder als eine Rühreinheit oder dergleichen ausgebildet sein. Alternativ könnte die Aufstelleinheit als ein Haushaltskleingerät ausgebildet sein. Vorzugsweise handelt es sich bei dem Haushaltskleingerät um ein standortungebundenes Haushaltsgerät, welches zumindest das Aufnahmeinduktionselement und zumindest eine Funktionseinheit, welche in einem Betriebszustand zumindest eine Haushaltsgerätefunktion bereitstellt, aufweist. Unter "standortungebunden" soll in diesem Zusammenhang verstanden werden, dass das Haushaltskleingerät in einem Haushalt durch einen Nutzer frei, und insbesondere ohne Hilfsmittel, positionierbar ist, insbesondere im Unterschied zu einem Haushaltsgroßgerät, welches an einer bestimmten Position in einem Haushalt fest positioniert und/oder installiert ist, wie beispielsweise ein Backofen oder ein Kühlschrank. Vorzugsweise ist das Haushaltskleingerät als ein Küchenkleingerät ausgebildet und stellt in dem Betriebszustand zumindest eine Hauptfunktion zu einer Bearbeitung von Lebensmitteln bereit. Das Haushaltskleingerät könnte, ohne darauf beschränkt zu sein, beispielsweise als eine Küchenmaschine und/oder als ein Mixer und/oder als ein Rührer und/oder als eine Mühle und/oder als eine Küchenwaage oder als ein Wasserkocher oder als eine Kaffeemaschine oder als ein Reiskocher oder als ein Milchaufschäumer oder als eine Fritteuse oder als ein Toaster oder als ein Entsafter oder als eine Schneidemaschine oder dergleichen ausgebildet sein.

Das Aufnahmeinduktionselement der Aufstelleinheit umfasst zumindest eine Sekundärspule und/oder ist als eine Sekundärspule ausgebildet. In einem Betriebszustand der Ausstelleinheit versorgt das Aufnahmeinduktionselement zumindest einen Verbraucher der Aufstelleinheit mit elektrischer Energie. Darüber hinaus ist denkbar, dass die Aufstelleinheit einen Energiespeicher, insbesondere einen Akkumulator, aufweist, welcher dazu vorgesehen ist, eine über das Aufnahmeinduktionselement empfangene elektrische Energie in einem Ladezustand zu speichern und in einem Entladezustand zu der Versorgung der Funktionseinheit bereitzustellen.

Vorzugsweise führt die Wechselrichtereinheit in dem Betriebszustand eine Frequenzwandlung durch und wandelt insbesondere eine eingangsseitige niederfrequente Wechselspannung in eine ausgangsseitige hochfrequente Wechselspannung um. Vorzugsweise weist die niederfrequente Wechselspannung eine Frequenz von höchstens 100 Hz auf. Vorzugsweise weist die hochfrequente Wechselspannung eine Frequenz von mindestens 1000 Hz auf. Die Wechselrichtereinheit ist mit der Steuereinheit verbunden und durch die Steuereinheit mittels Steuersignalen steuerbar. Vorzugsweise ist die Wechselrichtereinheit dazu vorgesehen, die Einstellung der durch das zumindest eine Versorgungsinduktionselement induktiv bereitgestellten Energie durch Einstellung der hochfrequenten Wechselspannung vorzunehmen. Vorzugsweise umfasst die Versorgungseinheit zumindest einen Gleichrichter. Die Wechselrichtereinheit weist zumindest ein Wechselrichterschaltelement auf. Vorzugsweise erzeugt das Wechselrichterschaltelement zu einem Betrieb des zumindest einen Versorgungsinduktionselements einen oszillierenden elektrischen Strom, vorzugsweise mit einer Frequenz von zumindest 15 kHz, insbesondere von wenigstens 17 kHz und vorteilhaft von mindestens 20 kHz. Vorzugsweise umfasst die Wechselrichtereinheit zumindest zwei Wechselrichterschaltelemente, welche bevorzugt als Bipolartransistoren mit isolierter Gateelektrode ausgebildet sind und besonders vorteilhaft zumindest einen Dämpfungskondensator.

Die Snubber-Einheit ist der Wechselrichtereinheit zugeordnet und dazu vorgesehen, eine Spannungsanstiegsgeschwindigkeit beim Schalten der Wechselrichterschaltelemente der Wechselrichtereinheit zu begrenzen und somit die beim Schalten der Wechselrichterschaltelemente auftretenden Schaltverluste zu reduzieren, vorzugsweise zu minimieren. Darüber hinaus ist die Snubber-Einheit insbesondere zu einem Schutz der Wechselrichterschaltelemente vor Überspannungen vorgesehen. Ferner ist die Snubber-Einheit insbesondere dazu vorgesehen, störende hochfrequente Signale zu neutralisieren und zu einer Erreichung einer verbesserten elektromagnetischen Verträglichkeit der Induktionsenergieversorgungsvorrichtung beizutragen. Die Snubber-Einheit weist die Mehrzahl von Snubber-Kondensatoren auf und kann darüber hinaus weitere Elemente, beispielsweise elektrische Widerstände und/oder Schalter, aufweisen. Die Snubber-Einheit weist insbesondere eine Mehrzahl von zumindest zwei, vorzugsweise zumindest drei und besonders bevorzugt zumindest vier Snubber-Kondensatoren auf. Jeder der Snubber-Kondensatoren der Snubber-Einheit ist vorzugsweise unmittelbar elektrisch leitend mit zumindest einem Anschluss eines der Wechselrichterschaltelemente der Wechselrichtereinheit verbunden. Es wäre denkbar, dass sämtliche Snubber-Kondensatoren der Snubber-Einheit im Wesentlichen identisch zueinander ausgebildet sind und insbesondere jeweils die gleiche elektrische Kapazität aufweisen. Vorzugsweise sind zumindest zwei der Snubber-Kondensatoren der Snubber-Einheit zueinander verschieden ausgebildet und unterscheiden sich insbesondere hinsichtlich ihrer jeweiligen elektrischen Kapazität und/oder Bauart. Ein Snubber-Kondensator unterscheidet sich von weiteren Kondensatoren der Induktionsenergieversorgungsvorrichtung, insbesondere von einem BUS-Kondensator und/oder von einem Resonanzkondensator, welcher mit zumindest einem der Versorgungsinduktionselemente einen elektromagnetischen Schwingkreis ausbildet, und/oder von weiteren möglicherweise vorhandenen Kondensatoren der Induktionsenergieversorgungsvorrichtung, zumindest hinsichtlich seiner Anordnung und Funktion in Bezug auf zumindest eines der Wechselrichterschaltelemente der Wechselrichtereinheit.

Unter einer "Steuereinheit" soll eine elektronische Einheit verstanden werden, die dazu vorgesehen ist, zumindest die Wechselrichtereinheit zu steuern und/oder zu regeln. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden.

Das Datenempfangselement ist vorzugsweise zu einer bidirektionalen drahtlosen Datenübertragung, das heißt sowohl zu einem drahtlosen Empfang als auch zu einem drahtlosen Senden von Daten, vorgesehen. Das Datenempfangselement könnte zu einer drahtlosen Datenübertragung zwischen der Aufstelleinheit und der Steuereinheit per RFID, oder per WIFI, oder per Bluetooth oder per ZigBee oder zur drahtlosen Datenübertragung nach einem anderen geeigneten Standard vorgesehen sein. Vorzugsweise ist das Datenempfangselement zu einem drahtlosen Empfang von Daten, welche zumindest den Betriebsparameter umfassen jedoch nicht auf den Betriebsparameter beschränkt sein müssen, per NFC vorgesehen. Besonders bevorzugt ist das Datenempfangselement sowohl zu dem drahtlosen Empfang als auch zu einem drahtlosen Senden von Daten, per NFC vorgesehen.

Bei dem Betriebsparameter der Aufstelleinheit könnte es sich beispielsweise um eine, insbesondere aktuell eingestellte, Zielleistung und/oder um eine Minimalleistung und/oder um eine Maximalleistung der Aufstelleinheit handeln. Denkbar wäre auch, dass der Betriebsparameter ein Parameter ist, welcher das Aufnahmeinduktionselement der Aufstelleinheit näher charakterisiert und welcher beispielsweise eine Form und/oder Größe, insbesondere einen Radius und/oder Durchmesser, und/oder eine Querschnittsfläche und/oder eine Wicklungszahl und/oder ein Material und/oder eine räumliche Position des Aufnahmeinduktionselements innerhalb der Aufstelleinheit und/oder einen Betrag eines elektrischen Widerstands und/oder einer Impedanz und/oder einer Induktivität und/oder eine magnetische Flussdichte und/oder eine Resonanzfrequenz und/oder dergleichen umfasst.

Vorzugsweise weist ein die Induktionsenergieversorgungsvorrichtung umfassendes Induktionsenergieübertragungssystem zumindest eine Aufstellplatte zum Aufstellen der Aufstelleinheit auf. Denkbar wäre auch, dass die Aufstellplatte Teil der Induktionsenergieversorgungsvorrichtung ist. Unter einer "Aufstellplatte" soll zumindest eine, insbesondere plattenartige, Einheit verstanden werden, welche zu einem Aufstellen wenigstens einer Aufstelleinheit und/oder zu einem Auflegen wenigstens eines Garguts vorgesehen ist. Die Aufstellplatte könnte beispielsweise als eine Arbeitsplatte, insbesondere als eine Küchenarbeitsplatte, oder als ein Teilbereich zumindest einer Arbeitsplatte, insbesondere zumindest einer Küchenarbeitsplatte, insbesondere der Induktionsenergieversorgungsvorrichtung, ausgebildet sein. Alternativ oder zusätzlich könnte die Aufstellplatte als eine Kochfeldplatte ausgebildet sein. Die als Kochfeldplatte ausgebildete Aufstellplatte könnte insbesondere zumindest einen Teil eines Kochfeldaußengehäuses ausbilden und insbesondere gemeinsam mit zumindest einer Außengehäuseeinheit, mit welcher die als Kochfeldplatte ausgebildete Aufstellplatte in wenigstens einem montierten Zustand insbesondere verbunden sein könnte, das Kochfeldaußengehäuse wenigstens zu einem Großteil ausbilden. Vorzugsweise ist die Aufstellplatte aus einem nichtmetallischen Werkstoff hergestellt. Die Aufstellplatte könnte beispielsweise wenigstens zu einem Großteil aus Glas und/oder aus Glaskeramik und/oder aus Neolith und/oder aus Dekton und/oder aus Holz und/oder aus Marmor und/oder aus Stein, insbesondere aus Naturstein, und/oder aus Schichtstoff und/oder aus Kunststoff und/oder aus Keramik gebildet sein. In der vorliegenden Anmeldung beziehen sich Lagebezeichnungen, wie beispielsweise "unterhalb" oder "oberhalb", auf einen montierten Zustand der Aufstellplatte, sofern dies nicht explizit anderweitig beschrieben ist. In dem montierten Zustand ist die Aufstellplatte vorzugsweise oberhalb der Versorgungseinheit angeordnet.

In der vorliegenden Anmeldung dienen Zahlwörter, wie beispielsweise "erste/r/s" und "zweite/r/s", welche bestimmten Begriffen vorangestellt sind, lediglich zu einer Unterscheidung von Objekten und/oder einer Zuordnung zwischen Objekten untereinander und implizieren keine vorhandene Gesamtanzahl und/oder Rangfolge der Objekte. Insbesondere impliziert ein "zweites Objekt" nicht zwangsläufig ein Vorhandensein eines "ersten Objekts".

Unter "vorgesehen" soll speziell programmiert, ausgelegt und/oder ausgestattet verstanden werden. Darunter, dass ein Objekt zu einer bestimmten Funktion vorgesehen ist, soll verstanden werden, dass das Objekt diese bestimmte Funktion in zumindest einem Anwendungs- und/oder Betriebszustand erfüllt und/oder ausführt.

Ferner wird vorgeschlagen, dass der Betriebsparameter eine Zielleistung der Aufstelleinheit ist. Hierdurch kann vorteilhaft eine Effizienz weiter gesteigert werden. Vorzugsweise handelt es sich bei der Zielleistung um eine Leistung, welche zu einem aktuellen Zeitpunkt, insbesondere zu einem Zeitpunkt des Datenempfangs durch die Steuereinheit, in der Aufstelleinheit eingestellt und zu einer Deckung eines aktuellen Energiebedarfs der Aufstelleinheit zu dem Zeitpunkt benötigt wird. Denkbar wäre auch, dass der Betriebsparameter mehrere Zielleistungen definiert, beispielsweise eine erste Zielleistung, welche die zu dem aktuellen Zeitpunkt benötigte Leistung definiert, und eine zweite Zielleistung, welche eine zu einem zukünftigen Zeitpunkt benötigte Leistung, beispielsweise nach Veränderung einer Leistungsstufe der Aufstelleinheit, definiert.

Zudem wird vorgeschlagen, dass die Induktionsenergieversorgungsvorrichtung eine Messeinheit aufweist, welche zur Messung zumindest eines weiteren Betriebsparameters der Aufstelleinheit vorgesehen ist. Hierdurch kann vorteilhaft eine Effizienz weiter verbessert werden. Die Messeinheit könnte zumindest ein optisches Element, beispielsweise eine Kamera und/oder eine Lichtschranke oder dergleichen, aufweisen, welches zu der Ermittlung des weiteren Betriebsparameters der Aufstelleinheit dazu vorgesehen ist, eine Form und/oder Größe der Aufstelleinheit und/oder einen aktuellen Bedeckungsgrad des Versorgungsinduktionselements durch das Aufnahmeinduktionselement zu detektieren. Vorzugsweise ist die Messeinheit Teil der Steuereinheit und ist elektrisch leitend mit der Versorgungseinheit verbunden. Vorzugsweise umfasst die Messeinheit einen Mikroprozessor. Zu der Ermittlung des weiteren Betriebsparameters misst die Messeinheit in einem Betriebszustand vorzugsweise zumindest ein Messsignal der Versorgungseinheit, insbesondere ein Signal eines Wechselstroms eines Schwingkreises, welcher durch das Versorgungsinduktionselement und zumindest ein Wechselrichterschaltelement der Wechselrichtereinheit ausgebildet wird. Die Messeinheit vergleicht das Messsignal, insbesondere mittels des Mikroprozessors, mit einem gespeicherten Referenzsignal, welches vorzugsweise in einem Referenzzustand gemessen ist, in welchem die Versorgungseinheit ohne Last, das heißt insbesondere ohne ein oberhalb des Versorgungsinduktionselements befindliches Aufnahmeinduktionselement, betrieben wurde, und ermittelt daraus den weiteren Betriebsparameter. Bei dem weiteren Betriebsparameter könnte es sich um einen Parameter handeln, welcher das Aufnahmeinduktionselement der Aufstelleinheit näher charakterisiert und welcher insbesondere zumindest eine elektrische und/oder elektromagnetische Kenngröße des Aufnahmeinduktionselements, beispielsweise einen Betrag eines elektrischen Widerstands und/oder einer Impedanz und/oder einer Induktivität und/oder eine magnetische Flussdichte und/oder eine Resonanzfrequenz und/oder dergleichen umfasst. Vorzugsweise handelt es sich bei dem weiteren Betriebsparameter um eine bei einem Betrieb der Versorgungseinheit zur induktiven Bereitstellung von Energie an die Aufstelleinheit auftretende, aktuelle, Verlustleistung. Denkbar wäre auch, dass der weitere Betriebsparameter dieselbe Kenngröße umfasst wie der Betriebsparameter. Beispielsweise könnten der Betriebsparameter und der weitere Betriebsparameter jeweils eine Zielleistung der Aufstelleinheit umfassen. Hierdurch kann vorteilhaft eine Überprüfung des von der Aufstelleinheit mittels des Datenempfangselements empfangenen Betriebsparameters durch die Steuereinheit ermöglicht und somit eine Fehleranfälligkeit der Induktionsenergieversorgungsvorrichtung reduziert werden. Des Weiteren wird vorgeschlagen, dass die Steuereinheit dazu vorgesehen ist, den weiteren Betriebsparameter bei der Einstellung der Snubber-Einheit zu berücksichtigen. Hierdurch kann vorteilhaft eine besonders genaue Anpassung der Einstellung der Snubber-Einheit durch die Steuereinheit erreicht und somit eine Effizienz weiter verbessert werden.

Darüber hinaus wird vorgeschlagen, dass zumindest einer der Snubber-Kondensatoren der Snubber-Einheit als ein variabler Kondensator ausgebildet ist. Durch eine derartige Ausgestaltung kann vorteilhaft eine Effizienz weiter gesteigert werden, insbesondere indem eine besonders genaue und stufenlose Anpassung der Einstellung der Snubber-Einheit ermöglicht ist. Bei dem variablen Kondensator könnte es sich um einen mechanisch variablen Kondensator, beispielsweise um einen Drehkondensator oder einen Trimmkondensator, insbesondere einen SMD-Trimmer oder einen Rohrtrimmer oder einen variablen Vakuumkondensator oder dergleichen, handeln. Denkbar wäre auch, dass der variable Kondensator als ein elektrisch variabler Kondensator, beispielsweise als eine Kapazitätsdiode oder als ein dielektrisch-variabler Kondensator oder als ein digitalvariabler Kondensator oder dergleichen, ausgebildet ist.

Ferner wird vorgeschlagen, dass die Snubber-Einheit zumindest ein Schaltelement aufweist, mittels dessen zumindest einer der Snubber-Kondensatoren durch die Steuereinheit zu- oder abschaltbar ist. Hierdurch kann vorteilhaft eine Effizienz weiter gesteigert werden. Insbesondere kann eine Kosteneffizienz verbessert werden, da eine Einstellungsmöglichkeit der Snubber-Einheit durch Zu- oder Abschalten einzelner Snubber-Kondensatoren mittels des Schaltelements besonders einfach und kostengünstig implementierbar ist. Das Schaltelement weist zumindest einen Steuerkontakt auf, über den es durch die Steuereinheit steuerbar ist. Das Schaltelement könnte als ein mechanisches und/oder elektromechanisches Schaltelement, beispielsweise als ein Relais, ausgebildet sein. Vorzugsweise ist das Schaltelement als ein Halbleiterschaltelement, insbesondere als ein Transistor, ausgebildet. Beispielsweise könnte das Schaltelement als ein FET, insbesondere als ein MOSFET, oder als ein RC-IGBT ausgebildet sein. Besonders bevorzugt ist das Schaltelement als ein HEMT-Transistor ausgebildet.

Zudem wird vorgeschlagen, dass eine gesamte elektrische Kapazität der Snubber-Einheit, durch die Steuereinheit auf zumindest zwei verschiedene Stufen innerhalb eines Wertebereiches von zumindest 0 nF und höchstens 40 nF einstellbar ist. Durch eine derartige Ausgestaltung kann vorteilhaft eine Flexibilität verbessert werden. Insbesondere ist die gesamte elektrische Kapazität der Snubber-Einheit durch die Steuereinheit auf zumindest zwei verschiedene Stufen innerhalb eines Wertebereichs von zumindest 1 nF, vorteilhaft von zumindest 2 nF, besonders vorteilhaft von zumindest 3 nF, vorzugsweise von zumindest 4 nF, besonders bevorzugt von zumindest 5 nF, und höchstens 39 nF, vorteilhaft höchstens 37 nF, besonders vorteilhaft höchstens 35 nF, vorzugsweise höchstens 34 nF, besonders bevorzugt höchstens 33 nF, einstellbar.

Des Weiteren wird vorgeschlagen, dass die gesamte elektrische Kapazität der Snubber-Einheit in einer ersten Stufe der beiden Stufen einen Wert zumindest 0 nF und höchstens 20 nF aufweist. Durch eine derartige Ausgestaltung kann vorteilhaft eine Effizienz weiter verbessert werden. Es kann insbesondere ein sehr effizienter Betrieb der Wechselrichtereinheit zur induktiven Bereitstellung von Energie durch das Versorgungsinduktionselement an Aufstelleinheiten mit geringem Leistungsbedarf, insbesondere einem Leistungsbedarf von bis zu 500 Watt, erreicht werden. Insbesondere weist die gesamte elektrische Kapazität der Snubber-Einheit in der ersten Stufe einen Wert von zumindest 1 nF, vorteilhaft von zumindest 2 nF, besonders vorteilhaft von zumindest 3 nF, vorzugsweise von zumindest 4 nF, besonders bevorzugt von zumindest 5 nF, und höchstens 19 nF, vorteilhaft höchstens 18 nF, besonders vorteilhaft höchstens 17 nF, vorzugsweise höchstens 16 nF und besonders bevorzugt höchstens 15 nF auf.

Darüber hinaus wird vorgeschlagen, dass die gesamte elektrische Kapazität der Snubber-Einheit in einer zweiten Stufe der beiden Stufen einen Wert zumindest 15 nF und höchstens 40 nF aufweist. Hierdurch kann vorteilhaft eine Effizienz weiter verbessert werden. Es kann insbesondere ein sehr effizienter Betrieb der Wechselrichtereinheit zur induktiven Bereitstellung von Energie durch das Versorgungsinduktionselement an Aufstelleinheiten mit mittlerem bis hohem Leistungsbedarf, insbesondere einem Leistungsbedarf von 500 Watt und mehr, erreicht werden. Insbesondere weist die gesamte elektrische Kapazität der Snubber-Einheit in der zweiten Stufe einen Wert von zumindest 16 nF, vorteilhaft von zumindest 17 nF, besonders vorteilhaft von zumindest 18 nF, vorzugsweise von zumindest 19 nF, besonders bevorzugt von zumindest 20 nF, und höchstens 39 nF, vorteilhaft höchstens 37 nF, besonders vorteilhaft höchstens 35 nF, vorzugsweise höchstens 34 nF und besonders bevorzugt höchstens 33 nF auf.

Die Erfindung betrifft ferner ein Induktionsenergieübertragungssystem mit einer Induktionsenergieversorgungsvorrichtung nach einer der vorhergehend beschriebenen Ausgestaltungen, mit zumindest einer Aufstelleinheit und insbesondere mit einer oberhalb der Versorgungseinheit angeordneten Aufstellplatte zum Aufstellen der Aufstelleinheit. Ein derartiges Induktionsenergieübertragungssystem zeichnet sich unter anderem durch ein besonders hohes Maß an Effizienz aus, welches insbesondere durch die vorhergehend beschriebenen Ausgestaltungen der Induktionsenergieversorgungsvorrichtung erreicht werden kann. Zudem kann durch ein derartiges Induktionsenergieübertragungssystem weiter vorteilhaft auch eine besonders hohe Flexibilität sowie ein hoher Bedienkomfort für Nutzer erreicht werden, indem ein besonders effizienter und zugleich einfacher und intuitiver Betrieb von verschiedenen Typen von Aufstelleinheiten des Induktionsenergieübertragungssystems, mit jeweils unterschiedlichen Leistungsanforderungen, ermöglicht ist.

In einer vorteilhaften Ausgestaltung des Induktionsenergieübertragungssystems wird vorgeschlagen, dass die Aufstelleinheit als ein Haushaltskleingerät ausgebildet ist. Hierdurch kann vorteilhaft eine Flexibilität weiter verbessert werden.

In einer weiteren vorteilhaften Ausgestaltung wird vorgeschlagen, dass das Induktionsenergieübertragungssystem zumindest eine weitere Aufstelleinheit aufweist, welche als ein Gargeschirr ausgebildet ist. Hierdurch kann vorteilhaft ein Bedienkomfort weiter verbessert werden. Es kann insbesondere eine präzise Steuerung einer durch die Versorgungseinheit induktiv bereitgestellten Energie zur Beheizung von in dem Gargeschirr angeordneten Lebensmitteln zur Verfügung gestellt werden.

Die Erfindung geht ferner aus von einem Verfahren zum Betrieb einer Induktionsenergieversorgungsvorrichtung, insbesondere nach einer der vorhergehend beschriebenen Ausgestaltungen, mit einer Versorgungseinheit, welche zumindest ein Versorgungsinduktionselement zur induktiven Bereitstellung von Energie an eine Aufstelleinheit aufweist, mit einer Wechselrichtereinheit zum Betrieb des Versorgungsinduktionselements und mit einer der Wechselrichtereinheit zugeordneten Snubber-Einheit, welche eine Mehrzahl von Snubber-Kondensatoren aufweist.

Es wird vorgeschlagen, dass in einem Betriebszustand zumindest ein Betriebsparameter der Aufstelleinheit durch ein Datenempfangselement drahtlos empfangen wird und eine Einstellung der Snubber-Einheit basierend auf dem Betriebsparameter angepasst wird. Durch ein derartiges Verfahren kann vorteilhaft ein besonders effizienter Betrieb der Induktionsenergieversorgungsvorrichtung ermöglicht werden.

Die Induktionsenergieversorgungsvorrichtung sowie das Induktionsenergieübertragungssystem sollen hierbei nicht auf die oben beschriebenen Anwendungen und Ausführungsformen beschränkt sein. Insbesondere können die Induktionsenergieversorgungsvorrichtung und/oder das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Es zeigen:
- Fig. 1: Ein Induktionsenergieübertragungssystem mit einer Induktionsenergieversorgungsvorrichtung, welche eine Versorgungseinheit und eine Steuereinheit umfasst, und mit zwei Aufstelleinheiten in einer schematischen Darstellung,
- Fig. 2: ein schematisches elektrisches Schaltbild der Versorgungseinheit mit einer Wechselrichtereinheit und einer der Wechselrichtereinheit zugeordneten Snubber-Einheit,
- Fig. 3: ein schematisches Diagramm zur Darstellung zweier Leistungskurven einer durch die Versorgungseinheit induktiv bereitstellbaren Leistung in Abhängigkeit einer Einstellung der Snubber-Einheit durch die Steuereinheit,
- Fig. 4: ein schematisches Diagramm zur Darstellung eines Verfahrens zum Betrieb der Induktionsenergieversorgungsvorrichtung und
- Fig. 5: ein weiteres Ausführungsbeispiel eines Induktionsenergieübertragungssystems mit einer Induktionsenergieversorgungsvorrichtung, welche eine Versorgungseinheit und eine Steuereinheit umfasst, und mit zwei Aufstelleinheiten in einer schematischen Darstellung.

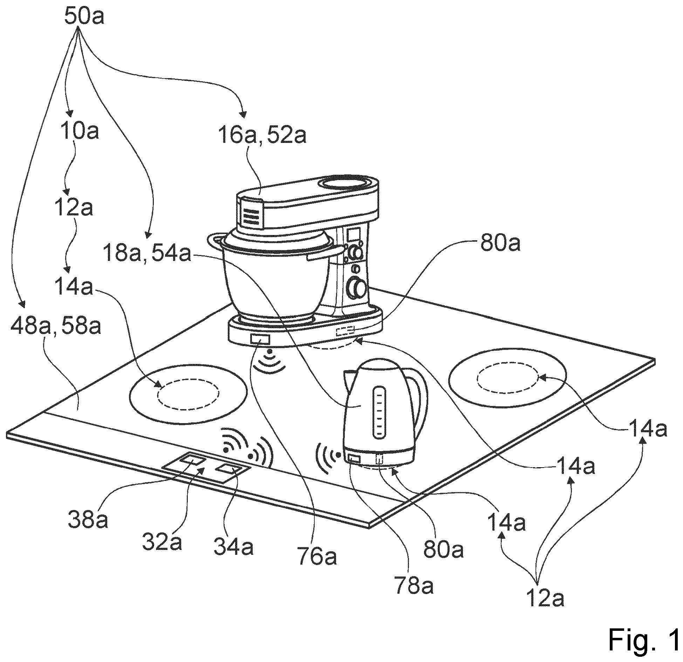

Figur 1 zeigt ein Induktionsenergieübertragungssystem 50a in einer schematischen Darstellung. Das Induktionsenergieübertragungssystem 50a weist eine Induktionsenergieversorgungsvorrichtung 10a auf.

Das Induktionsenergieübertragungssystem 50a weist zumindest eine Aufstelleinheit 16a auf. Vorliegend weist das Induktionsenergieübertragungssystem 50a die Aufstelleinheit 16a und eine weitere Aufstelleinheit 18a auf. Die Aufstelleinheit 16a ist vorliegend als ein Haushaltskleingerät 52a ausgebildet und zwar als eine Küchenmaschine. Die weitere Aufstelleinheit 18a ist vorliegend als ein weiteres Haushaltskleingerät 54a ausgebildet und zwar als ein Wasserkocher.

Das Induktionsenergieübertragungssystem 50a weist eine Aufstellplatte 48a auf. In dem vorliegenden Ausführungsbeispiel ist die Aufstellplatte 48a als eine Kochfeldplatte 58a ausgebildet.

Die Induktionsenergieversorgungsvorrichtung 10a weist eine Versorgungseinheit 12a auf. Die Versorgungseinheit 12a weist zumindest ein Versorgungsinduktionselement 14a zur induktiven Bereitstellung von Energie an die Aufstelleinheit 16a und/oder die weitere Aufstelleinheit 18a auf. Vorliegend weist die Versorgungseinheit 12a insgesamt vier Versorgungsinduktionselemente 14a auf, wobei jede beliebige andere Anzahl denkbar wäre.

Die Aufstelleinheit 16a und die weitere Aufstelleinheit 18a weisen jeweils ein Aufnahmeinduktionselement 80a auf, welche zu einem Empfang zumindest eines Teils der durch das Versorgungsinduktionselement 14a induktiv bereitgestellten Energie vorgesehen sind.

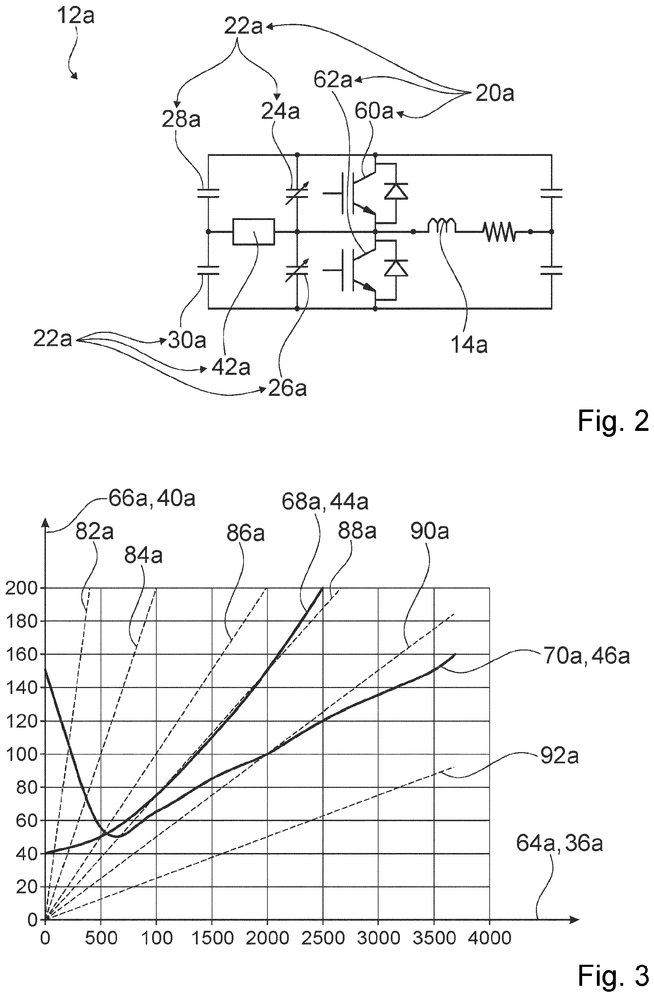

Die Induktionsenergieversorgungsvorrichtung 10a weist eine Wechselrichtereinheit 20a (vgl. Figur 2) auf. Die Induktionsenergieversorgungsvorrichtung 10a weist eine Steuereinheit 32a zur Steuerung der Wechselrichtereinheit 20a auf.

Die Steuereinheit 32a weist ein Datenempfangselement 34a auf. Das Datenempfangselement 34a ist zu einem drahtlosen Empfang zumindest eines Betriebsparameters 36a (vgl. Figur 3) von der Aufstelleinheit 16a vorgesehen. Vorliegend ist das Datenempfangselement 34a als ein NFC-Element ausgebildet und sowohl zu einem drahtlosen Empfang von Daten als auch zu einem drahtlosen Senden von Daten vorgesehen. Die Aufstelleinheit 16a weist ein Datenübertragungselement 76a zu einem drahtlosen Senden und Empfangen von Daten auf. Gleichermaßen weist die weitere Aufstelleinheit 18a ein weiteres Datenübertragungselement 78a zu einem drahtlosen Senden und Empfangen von Daten auf. Das Datenübertragungselement 76a und das weitere Datenübertragungselement 78a sind vorliegend jeweils als NFC-Elemente ausgebildet. In zumindest einem Betriebszustand des Induktionsenergieübertragungssystems 50a sendet die Aufstelleinheit 16a den Betriebsparameter 36a an das Datenempfangselement 34a der Steuereinheit 32a.

Figur 2 zeigt ein schematisches elektrisches Schaltbild mit der Versorgungseinheit 12a. Die Wechselrichtereinheit 20a weist vorliegend zumindest zwei Wechselrichterschaltelemente 60a, 62a zum Betrieb des Versorgungsinduktionselements 14a auf. Die Wechselrichterschaltelemente 60a, 62a sind vorliegend als Bipolartransistoren mit isolierter Gateelektrode (IGBT) ausgebildet und in einer Halbbrückenschaltung angeordnet. In einem Betriebszustand stellen die Wechselrichterschaltelemente 60a, 62a einen hochfrequenten Wechselstrom an das Versorgungsinduktionselement 14a zur induktiven Bereitstellung von Energie zur Verfügung.

Die Induktionsenergieversorgungsvorrichtung 10a weist eine Snubber-Einheit 22a auf. Die Snubber-Einheit 22a ist der Wechselrichtereinheit 20a zugeordnet. Die Snubber-Einheit 22a weist eine Mehrzahl von Snubber-Kondensatoren 24a, 26a, 28a, 30a auf. Vorliegend weist die Snubber-Einheit 22a insgesamt vier Snubber-Kondensatoren 24a, 26a, 28a, 30a auf, wobei jede beliebige Anzahl größer als Eins denkbar wäre.

Die Steuereinheit 32a ist dazu vorgesehen, eine Einstellung der Snubber-Einheit 22a basierend auf dem Betriebsparameter 36a anzupassen.

Die Induktionsenergieversorgungsvorrichtung 10a weist eine Messeinheit 38a (vgl. Figur 1) auf. Die Messeinheit 38a ist zur Ermittlung zumindest eines weiteren Betriebsparameters 40a der Aufstelleinheit 16a vorgesehen. Vorliegend ist die Messeinheit 38a Teil der Steuereinheit 32a und elektrisch leitend mit der Versorgungseinheit 12a verbunden. Die Messeinheit 38a umfasst einen Mikroprozessor (nicht dargestellt). In einem Betriebszustand misst die Messeinheit 38a zumindest ein Messsignal eines Wechselstroms in einem Schwingkreis, welcher durch das Versorgungsinduktionselement 14a und die Wechselrichterschaltelemente 60a, 62a ausgebildet wird. Die Messeinheit 38a vergleicht das Messignal mit einem gespeicherten Referenzsignal und ermittelt daraus den weiteren Betriebsparameter 40a. Das Referenzsignal ist in einem Referenzzustand gemessen, in welchem die Versorgungseinheit 12a ohne Last, das heißt ohne ein oberhalb des Versorgungsinduktionselements 14a befindliches Aufnahmeinduktionselement 80a, betrieben wird. Sobald das Aufnahmeinduktionselement 80a oberhalb des Versorgungsinduktionselements 14a angeordnet ist, weicht das Messsignal von dem Referenzsignal ab. Bei dem weiteren Betriebsparameter 40a handelt es sich vorliegend um eine Verlustleistung der Versorgungseinheit 20a (vgl. Figur 3).

Die Steuereinheit 32a ist dazu vorgesehen, den weiteren Betriebsparameter 40a bei der Einstellung der Snubber-Einheit 22a zu berücksichtigen.

Zumindest einer der Snubber-Kondensatoren 24a, 26a, 28a, 30a ist als ein variabler Kondensator ausgebildet. Vorliegend sind der Snubber-Kondensator 24a und der Snubber-Kondensator 26a jeweils als variable Kondensatoren ausgebildet und zwar als Drehkondensatoren, wobei alternativ auch andere Typen von variablen Kondensatoren zum Einsatz gebracht werden könnten.

Die Snubber-Einheit 22a weist zumindest ein Schaltelement 42a auf. Mittels des Schaltelements 42a ist zumindest einer der Snubber-Kondensatoren 24a, 26a, 28a, 30a durch die Steuereinheit 32a zu- oder abschaltbar. Vorliegend weist die Snubber-Einheit 22a genau ein Schaltelement 42a auf, wobei jede beliebige andere Anzahl denkbar wäre. Mittels des Schaltelements 42a sind vorliegend zwei der Snubber-Kondensatoren 24a, 26a, 28a, 30a und zwar der Snubber-Kondensator 28a und der Snubber-Kondensator 30a durch die Steuereinheit 32a zu- oder abschaltbar.

Eine gesamte elektrische Kapazität der Snubber-Einheit 22a ist durch die Steuereinheit 32a auf zumindest zwei verschiedene Stufen 44a, 46a (vgl. Figur 3) innerhalb eines Wertebereichs von zumindest 0 nF und höchstens 40 nF einstellbar. Eine erste Stufe 44a der zumindest zwei verschiedenen Stufen 44a, 46a entspricht einem geöffneten Zustand des Schaltelements 42a. In dem geöffneten Zustand sind der Snubber-Kondensator 24a und der Snubber-Kondensator 26a elektrisch leitend mit den Wechselrichterschaltelementen 60a, 62a verbunden, während der Snubber-Kondensator 28a und der Snubber-Kondensator 30a nicht elektrisch leitend mit den Wechselrichterschaltelementen 60a, 62a verbunden sind. In der ersten Stufe 44a der beiden Stufen 44a, 46a weist die gesamte elektrische Kapazität der Snubber-Einheit 22a einen Wert von zumindest 0 nF und höchstens 20 nF auf. Eine zweite Stufe 46a der zumindest zwei verschiedenen Stufen 44a, 46a entspricht einem geschlossenen Zustand des Schaltelements 42a. In dem geschlossenen Zustand sind alle Snubber-Kondensatoren 24a, 26a, 28a, 30a der Snubber-Einheit 22a elektrisch leitend mit den Wechselrichterschaltelementen 60a, 62a verbunden. In der zweiten Stufe 44a der beiden Stufen 44a, 46a weist die gesamte elektrische Kapazität der Snubber-Einheit 22a einen Wert von zumindest 15 nF und höchstens 40 nF auf.

Figur 3 zeigt ein schematisches Diagramm zur Darstellung einer durch die Versorgungseinheit 12a induktiv bereitstellbaren Leistung in Abhängigkeit einer Einstellung der Snubber-Einheit 22a durch die Steuereinheit 32a basierend auf dem Betriebsparameter 36a der Aufstelleinheit 16a. Auf einer Abszisse 64a des Diagramms ist eine Zielleistung der Aufstelleinheit 16a in Watt aufgetragen.

Die Steuereinheit 32a ist dazu vorgesehen, eine Einstellung der Snubber-Einheit 22a basierend auf dem Betriebsparameter 36a anzupassen. Vorliegend ist der Betriebsparameter 36a die Zielleistung der Aufstelleinheit 16a. Auf einer Ordinate 66a ist die Verlustleistung der Wechselrichtereinheit 20a in Watt aufgetragen. Eine erste Leistungskurve 68a zeigt einen Verlauf der Verlustleistung in Abhängigkeit der Zielleistung bei einer Einstellung der Snubber-Einheit 22a in der ersten Stufe 44a. Ein zweite Leistungskurve 70a zeigt einen Verlauf der Verlustleistung in Abhängigkeit der Zielleistung bei einer Einstellung der Snubber-Einheit 22a in der zweiten Stufe 46a. Die Verläufe der Leistungskurven 68a, 70a sind Verläufe, welche unter Idealbedingungen gemessen wurden. Sofern die durch die Messeinheit 38a in dem Betriebszustand als weiterer Betriebsparameter 40a gemessene Verlustleistung von der theoretischen Verlustleistung gemäß der Leistungskurven 68a, 70a abweicht, passt die Steuereinheit 32a die Einstellung der Snubber-Einheit 22a weiter an und zwar insbesondere durch eine Veränderung der Kapazität der als variable Kondensatoren ausgebildeten Snubber-Kondensatoren 24a, 26a.

In dem Diagramm der Figur 3 sind mehrere Geraden 82a, 84a, 86a, 88a, 90a, 92a dargestellt, welche jeweils einen elektrischen Wirkungsgrad der Versorgungseinheit kennzeichnen. Die Gerade 82a entspricht einem Wirkungsgrad von 50 %, das heißt im Bereich oberhalb der Geraden 82a geht zumindest die Hälfte der zu dem Betrieb der Wechselrichtereinheit 20a eingesetzten elektrischen Leistung als Verlustleistung verloren. Die Gerade 84a entspricht einem Wirkungsgrad von 80 %, das heißt in einem Bereich unterhalb der Geraden 84a können zumindest 80 % der zu dem Betrieb der Wechselrichtereinheit 20a eingesetzten Leistung genutzt werden. Die Gerade 86a entspricht einem Wirkungsgrad von 90 %, die Gerade 88a entspricht einem Wirkungsgrad von 92,5 %, die Gerade 90a entspricht einem Wirkungsgrad von 95 % und die Gerade 92a entspricht einem Wirkungsgrad von 97,5 %. Wie dem Diagramm der Figur 3 zu entnehmen ist, kann die Induktionsenergieversorgungsvorrichtung 10a für hohe Zielleistungen der Aufstelleinheit 16a bei einer Einstellung der Snubber-Einheit 22a in der zweiten Stufe 46a sehr effizient betrieben werden. Für Zielleistungen ab ca. 2.000 Watt können Wirkungsgrade von 95 % und mehr erreicht werden. Für geringe Zielleistungen der Aufstelleinheit 16a bis zu 500 Watt zeigt sich hingegen ein relativ geringer Wirkungsgrad bei einer Einstellung der Snubber-Einheit 22a in der zweiten Stufe 46a, wohingegen der Wirkungsgrad bei einer Einstellung der Snubber-Einheit 22a in der ersten Stufe 44a für geringe Zielleistungen deutlich größer ist. Die Steuereinheit 32a stellt die Snubber-Einheit 22a in dem Betriebszustand daher für geringe Zielleistungen bis ca. 500 Watt bevorzugt in der ersten Stufe 44a und für mittlere bis hohe Leistungen ab ca. 500 Watt bevorzugt in der zweiten Stufe 46a ein.

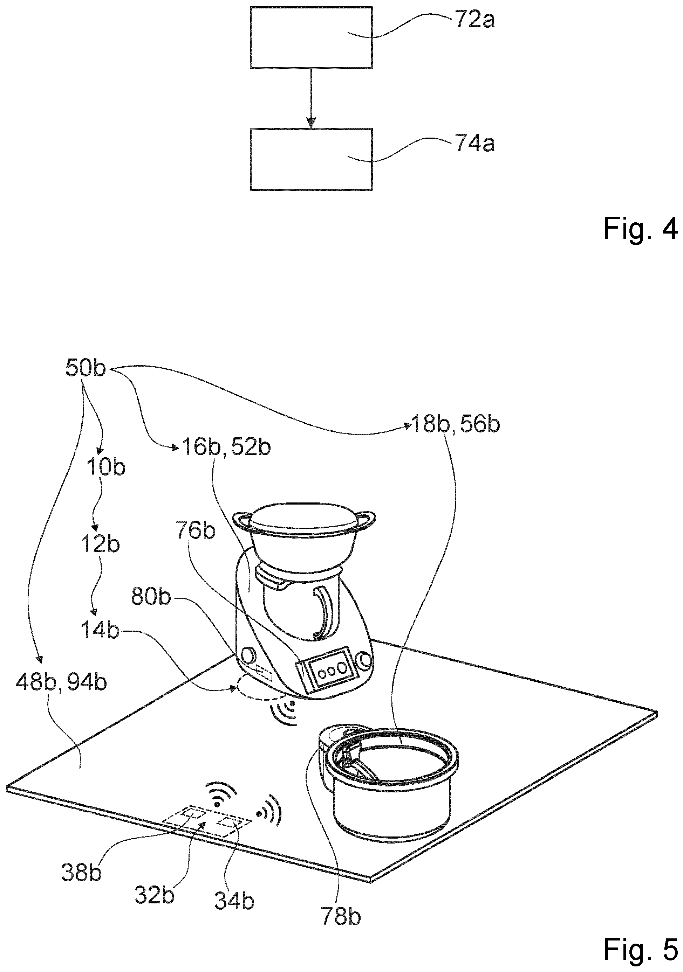

Figur 4 zeigt ein schematisches Diagramm zur Darstellung eines Verfahrens zum Betrieb der Induktionsenergieversorgungsvorrichtung 10a. In dem Verfahren wird in einem Betriebszustand der Induktionsenergieversorgungsvorrichtung 10a zumindest der Betriebsparameter 36a der Aufstelleinheit 16a durch das Datenempfangselement 34a drahtlos empfangen und eine Einstellung der Snubber-Einheit 22a basierend auf dem Betriebsparameter 36a angepasst. Das Verfahren umfasst zumindest zwei Verfahrensschritte 72a, 74a. In einem Verfahrensschritt 72a wird in dem Betriebszustand der Betriebsparameter 36a der Aufstelleinheit 16a durch das Datenempfangselement 34a drahtlos empfangen. In einem weiteren Verfahrensschritt 74a wird der Betriebsparameter 36a durch die Steuereinheit 32a verarbeitet und anschließend eine Einstellung der Snubber-Einheit 22a basierend auf dem Betriebsparameter 36a angepasst.

In Figur 5 ist ein weiteres Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Figuren 1 bis 4 verwiesen werden kann. Zur Unterscheidung der Ausführungsbeispiele ist der Buchstabe a in den Bezugszeichen des Ausführungsbeispiels in den Figuren 1 bis 4 durch den Buchstaben b in den Bezugszeichen des Ausführungsbeispiels der Figur 5 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 4 verwiesen werden.

Figur 5 zeigt ein weiteres Ausführungsbeispiel eines Induktionsenergieübertragungssystems 50b in einer schematischen Darstellung.

Das Induktionsenergieübertragungssystem 50b weist eine Aufstelleinheit 16b auf. Die Aufstelleinheit 16b ist als ein Haushaltskleingerät 52b ausgebildet und zwar als eine Küchenmaschine. Das Induktionsenergieübertragungssystem 50b weist zumindest eine weitere Aufstelleinheit 18b auf. Im Unterschied zu dem vorhergehenden Ausführungsbeispiel ist die Aufstelleinheit 18b als ein Gargeschirr 56b ausgebildet.

Das Induktionsenergieübertragungssystem 50b weist eine Aufstellplatte 48b zum Aufstellen der Aufstelleinheit 16b und der weiteren Aufstelleinheit 18b auf. Im Unterschied zu dem vorhergehenden Ausführungsbeispiel ist die Aufstellplatte 48b als eine Küchenarbeitsplatte 94b ausgebildet.

Das Induktionsenergieübertragungssystem 50b weist eine Induktionsenergieversorgungsvorrichtung 10b mit einer Versorgungseinheit 12b auf. Die Versorgungseinheit 12b weist zumindest ein Versorgungsinduktionselement 14b zur induktiven Bereitstellung von Energie an die Aufstelleinheit 16b und/oder die weitere Aufstelleinheit 18b auf. Vorliegend weist die Versorgungseinheit 12b genau zwei Versorgungsinduktionselemente 14b auf, wobei jede beliebige andere Anzahl denkbar wäre.

Die Induktionsenergieversorgungsvorrichtung 10b umfasst eine Wechselrichtereinheit (nicht dargestellt) und eine der Wechselrichtereinheit zugeordnete Snubber-Einheit (nicht dargestellt), welche eine Mehrzahl von Snubber-Kondensatoren (nicht dargestellt) aufweist. Die Induktionsenergieversorgungsvorrichtung 10b weist eine Steuereinheit 32b zur Steuerung der Wechselrichtereinheit auf. Die Steuereinheit 32b weist ein Datenempfangselement 34b zu einem drahtlosen Empfang zumindest eines Betriebsparameters (nicht dargestellt) der Aufstelleinheit 16b auf und ist dazu vorgesehen, eine Einstellung der Snubber-Einheit basierend auf dem Betriebsparameter anzupassen. Hinsichtlich eines Aufbaus der Snubber-Einheit sowie einer Funktionsweise einer Einstellung der Snubber-Einheit durch die Steuereinheit 32b kann auf die obige Beschreibung des Ausführungsbeispiels der Figuren 1 bis 4 verwiesen werden.

### Bezugszeichen

- 10: Induktionsenergieversorgungsvorrichtung
- 12: Versorgungseinheit
- 14: Versorgungsinduktionselement
- 16: Aufstelleinheit
- 18: weitere Aufstelleinheit
- 20: Wechselrichtereinheit
- 22: Snubber-Einheit
- 24: Snubber- Kondensator
- 26: Snubber- Kondensator
- 28: Snubber- Kondensator
- 30: Snubber- Kondensator
- 32: Steuereinheit
- 34: Datenempfangselement
- 36: Betriebsparameter
- 38: Messeinheit
- 40: weiterer Betriebsparameter
- 42: Schaltelement
- 44: erste Stufe
- 46: zweite Stufe
- 48: Aufstellplatte
- 50: Induktionsenergieübertragungssystem
- 52: Haushaltskleingerät
- 54: weiteres Haushaltskleingerät
- 56: Gargeschirr
- 58: Kochfeldplatte
- 60: Wechselrichterschaltelement
- 62: Wechselrichterschaltelement
- 64: Abszisse
- 66: Ordinate
- 68: Leistungskurve
- 70: Leistungskurve
- 72: Verfahrensschritt
- 74: weiterer Verfahrensschritt
- 76: Datenübertragungselement
- 78: weiteres Datenübertragungselement
- 80: Aufnahmeinduktionselement
- 82: Gerade
- 84: Gerade
- 86: Gerade
- 88: Gerade
- 90: Gerade
- 92: Gerade
- 94: Küchenarbeitsplatte

## Patentansprüche

1. Induktionsenergieversorgungsvorrichtung (10a; 10b) mit einer Versorgungseinheit (12a; 12b), welche zumindest ein Versorgungsinduktionselement (14a; 14b) zur induktiven Bereitstellung von Energie an eine Aufstelleinheit (16a, 18a; 16b, 18b) aufweist, mit einer Wechselrichtereinheit (20a) zum Betrieb des Versorgungsinduktionselements (14a; 14b), mit einer der Wechselrichtereinheit (20a) zugeordneten Snubber-Einheit (22a), welche eine Mehrzahl von Snubber-Kondensatoren (24a, 26a, 28a, 30a) aufweist, und mit einer Steuereinheit (32a; 32b) zur Steuerung der Wechselrichtereinheit (20a), **dadurch gekennzeichnet, dass** die Steuereinheit (32a; 32b) ein Datenempfangselement (34a; 34b) zu einem drahtlosen Empfang zumindest eines Betriebsparameters (36a) von der Aufstelleinheit (16a, 18a; 16b, 18b) aufweist und dazu vorgesehen ist, eine Einstellung der Snubber-Einheit (22a) basierend auf dem Betriebsparameter (36a) anzupassen.

2. Induktionsenergieversorgungsvorrichtung (10a; 10b) nach Anspruch 1, **dadurch gekennzeichnet, dass** der Betriebsparameter (36a) eine Zielleistung der Aufstelleinheit (16a, 18a; 16b, 18b) ist.

3. Induktionsenergieversorgungsvorrichtung (10a; 10b) nach Anspruch 1 oder 2, **gekennzeichnet durch** eine Messeinheit (38a), welche zur Ermittlung zumindest eines weiteren Betriebsparameters (40a) der Aufstelleinheit (16a, 18a; 16b, 18b) vorgesehen ist.

4. Induktionsenergieversorgungsvorrichtung (10a; 10b) nach Anspruch 3, **dadurch gekennzeichnet, dass** die Steuereinheit (32a; 32b) dazu vorgesehen ist, den weiteren Betriebsparameter (40a) bei der Einstellung der Snubber-Einheit (22a) zu berücksichtigen.

5. Induktionsenergieversorgungsvorrichtung (10a; 10b) nach einem der vorhergehenden Ansprüche, **dadurch gekennzeichnet, dass** zumindest einer der Snubber-Kondensatoren (24a, 26a, 28a, 30a) der Snubber-Einheit (22a) als ein variabler Kondensator ausgebildet ist.

6. Induktionsenergieversorgungsvorrichtung (10a; 10b) nach einem der vorhergehenden Ansprüche, **dadurch gekennzeichnet, dass** die Snubber-Einheit (22a) zumindest ein Schaltelement (42a) aufweist, mittels dessen zumindest einer der Snubber-Kondensatoren (24a, 26a, 28a, 30a) durch die Steuereinheit (32a; 32b) zu- oder abschaltbar ist.

7. Induktionsenergieversorgungsvorrichtung (10a; 10b) nach einem der vorhergehenden Ansprüche, **dadurch gekennzeichnet, dass** eine gesamte elektrische Kapazität der Snubber-Einheit (22a), durch die Steuereinheit (32a) auf zumindest zwei verschiedene Stufen (44a, 46a) innerhalb eines Wertebereiches von zumindest 0 nF und höchstens 40 nF einstellbar ist.

8. Induktionsenergieversorgungsvorrichtung (10a; 10b) nach Anspruch 7, **dadurch gekennzeichnet, dass** die gesamte elektrische Kapazität der Snubber-Einheit (22a) in einer ersten Stufe (44a) der beiden Stufen (44a, 46a) einen Wert von zumindest 0 nF und höchstens 20 nF aufweist.

9. Induktionsenergieversorgungsvorrichtung (10a; 10b) nach Anspruch 7 oder 8, **dadurch gekennzeichnet, dass** die gesamte elektrische Kapazität der Snubber-Einheit (22a) in einer zweiten Stufe (46a) der beiden Stufen (44a, 46a) einen Wert von zumindest 15 nF und höchstens 40 nF aufweist.

10. Induktionsenergieübertragungssystem (50a; 50b) mit einer Induktionsenergieversorgungsvorrichtung (10a; 10b) nach einem der vorhergehenden Ansprüche, mit zumindest einer Aufstelleinheit (16a, 18a; 16b, 18b) und insbesondere mit einer oberhalb der Versorgungseinheit (12a; 12b) angeordneten Aufstellplatte (48a; 48b) zum Aufstellen der Aufstelleinheit (16a, 18a; 16b, 18b).

11. Induktionsenergieübertragungssystem (50a; 50b) nach Anspruch 10, **dadurch gekennzeichnet, dass** die Aufstelleinheit (16a, 18a; 16b) als ein Haushaltskleingerät (52a, 54a; 52b) ausgebildet ist.

12. Induktionsenergieübertragungssystem (10b) nach Anspruch 10 oder 11, **gekennzeichnet durch** zumindest eine weitere Aufstelleinheit (18b), welche als ein Gargeschirr (56b) ausgebildet ist.

13. Verfahren zum Betrieb einer Induktionsenergieversorgungsvorrichtung (10a; 10b), insbesondere nach einem der Ansprüche 1 bis 9, mit einer Versorgungseinheit (12a; 12b), welche zumindest ein Versorgungsinduktionselement (14a; 14b) zur induktiven Bereitstellung von Energie an eine Aufstelleinheit (16a, 18a; 16b, 18b) aufweist, mit einer Wechselrichtereinheit (20a) zum Betrieb des Versorgungsinduktionselements (14a; 14b) und mit einer der Wechselrichtereinheit (20a) zugeordneten Snubber-Einheit (22a), welche eine Mehrzahl von Snubber-Kondensatoren (24a, 26a, 28a, 30a) aufweist, **dadurch gekennzeichnet, dass** in einem Betriebszustand zumindest ein Betriebsparameter (36a) der Aufstelleinheit (16a, 18a; 16b, 18b) durch ein Datenempfangselement (34a) drahtlos empfangen wird und eine Einstellung der Snubber-Einheit (22a) basierend auf dem Betriebsparameter (36a) angepasst wird.

## Claims

1. Induction energy supply device (10a; 10b) with a supply unit (12a; 12b) that has at least one supplying induction element (14a; 14b) for inductively providing energy to a positioned unit (16a, 18a; 16b, 18b), with an inverter unit (20a) for operating the supplying induction element (14a; 14b), with a snubber unit (22a) which is allocated to the inverter unit (20a) and has a plurality of snubber capacitors (24a, 26a, 28a, 30a), and with a control unit (32a; 32b) for controlling the inverter unit (20a), **characterised in that** the control unit (32a; 32b) has a data reception element (34a; 34b) for wireless reception of at least one operating parameter (36a) from the positioned unit (16a, 18a; 16b, 18b) and is provided to adjust a setting of the snubber unit (22a) on the basis of the operating parameter (36a).

2. Induction energy supply device (10a; 10b) according to claim 1, **characterised in that** the operating parameter (36a) is a target power of the positioned unit (16a, 18a; 16b, 18b).

3. Induction energy supply device (10a; 10b) according to claim 1 or 2, **characterised by** a measuring unit (38a) which is provided for determining at least one further operating parameter (40a) of the positioned unit (16a, 18a; 16b, 18b).

4. Induction energy supply device (10a; 10b) according to claim 3, **characterised in that** the control unit (32a; 32b) is provided to consider the further operating parameter (40a) when setting the snubber unit (22a).

5. Induction energy supply device (10a; 10b) according to one of the preceding claims, **characterised in that** at least one of the snubber capacitors (24a, 26a, 28a, 30a) of the snubber unit (22a) is configured as a variable capacitor.

6. Induction energy supply device (10a; 10b) according to one of the preceding claims, **characterised in that** the snubber unit (22a) has at least one switching element (42a), by means of the switching element at least one of the snubber capacitors (24a, 26a, 28a, 30a) being able to be switched on or off by the control unit (32a; 32b).

7. Induction energy supply device (10a; 10b) according to one of the preceding claims, **characterised in that** a total electrical capacitance of the snubber unit (22a) can be set by the control unit (32a) to at least two different levels (44a, 46a) within a value range of at least 0 nF and of at most 40 nF.

8. Induction energy supply device (10a; 10b) according to claim 7, **characterised in that,** in a first level (44a) of the two levels (44a, 46a), the total electrical capacitance of the snubber unit (22a) has a value of at least 0 nF and of at most 20 nF.

9. Induction energy supply device (10a; 10b) according to claim 7 or 8, **characterised in that,** in a second level (46a) of the two levels (44a, 46a), the total electrical capacitance of the snubber unit (22a) has a value of at least 15 nF and of at most 40 nF.

10. Induction energy transmission system (50a; 50b) with an induction energy supply device (10a; 10b) according to one of the preceding claims, with at least one positioned unit (16a, 18a; 16b, 18b) and, in particular, with a positioning plate (48a, 48b) arranged above the supply unit (12a; 12b) for positioning the positioned unit (16a, 18a; 16b, 18b).

11. Induction energy transmission system (50a; 50b) according to claim 10, **characterised in that** the positioned unit (16a, 18a; 16b) is configured as a small household appliance (52a, 54a; 52b).

12. Induction energy transmission system (10b) according to claim 10 or 11, **characterised by** at least one further positioned unit (18b) which is configured as an item of cookware (56b).

13. Method for operating an induction energy supply device (10a; 10b), in particular according to one of claims 1 to 9, with a supply unit (12a; 12b) that has at least one supplying induction element (14a; 14b) for inductively providing energy to a positioned unit (16a, 18a; 16b, 18b), with an inverter unit (20a) for operating the supplying induction element (14a; 14b) and with a snubber unit (22a) which is allocated to the inverter unit (20a) and has a plurality of snubber capacitors (24a, 26a, 28a, 30a), **characterised in that** in an operating state at least one operating parameter (36a) of the positioned unit (16a, 18a; 16b, 18b) is wirelessly received by a data reception element (34a) and a setting of the snubber unit (22a) is adjusted on the basis of the operating parameter (36a).

## Revendications

1. Dispositif d'alimentation en énergie par induction (10a ; 10b) avec une unité d'alimentation (12a ; 12b) qui présente au moins un élément d'induction d'alimentation (14a ; 14b) pour la mise à disposition inductive d'énergie à une unité de mise en place (16a, 18a ; 16b, 18b), avec une unité d'onduleur (20a) pour l'exploitation de l'élément d'induction d'alimentation (14a ; 14b), avec une unité Snubber (22a) affectée à l'unité d'onduleur (20a), qui présente une pluralité de condensateurs Snubber (24a, 26a, 28a, 30a), et avec une unité de commande (32a ; 32b) pour la commande de l'unité d'onduleur (20a), **caractérisé en ce que** l'unité de commande (32a ; 32b) présente un élément de réception de données (34a ; 34b) pour une réception sans fil d'au moins un paramètre d'exploitation (36a) de l'unité de mise en place (16a, 18a ; 16b, 18b) et est prévue pour adapter un réglage de l'unité Snubber (22a) sur la base du paramètre d'exploitation (36a).

2. Dispositif d'alimentation en énergie par induction (10a ; 10b) selon la revendication 1, **caractérisé en ce que** le paramètre d'exploitation (36a) est une puissance cible de l'unité de mise en place (16a, 18a ; 16b, 18b).

3. Dispositif d'alimentation en énergie par induction (10a ; 10b) selon la revendication 1 ou 2, **caractérisé par** une unité de mesure (38a) qui est prévue pour la détermination d'au moins un paramètre d'exploitation supplémentaire (40a) de l'unité de mise en place (16a, 18a ; 16b, 18b).

4. Dispositif d'alimentation en énergie par induction (10a ; 10b) selon la revendication 3, **caractérisé en ce que** l'unité de commande (32a ; 32b) est prévue pour tenir compte du paramètre d'exploitation supplémentaire (40a) lors du réglage de l'unité Snubber (22a).

5. Dispositif d'alimentation en énergie par induction (10a ; 10b) selon l'une des revendications précédentes, **caractérisé en ce qu'**au moins un des condensateurs Snubber (24a, 26a, 28a, 30a) de l'unité Snubber (22a) est conçu sous la forme d'un condensateur variable.

6. Dispositif d'alimentation en énergie par induction (10a ; 10b) selon l'une des revendications précédentes, **caractérisé en ce que** l'unité Snubber (22a) présente au moins un élément de commutation (42a) au moyen duquel au moins l'un des condensateurs Snubber (24a, 26a, 28a, 30a) peut être mis en ou hors circuit par l'unité de commande (32a ; 32b).

7. Dispositif d'alimentation en énergie par induction (10a ; 10b) selon l'une des revendications précédentes, **caractérisé en ce qu'**une capacité électrique totale de l'unité Snubber (22a) peut être réglée par l'unité de commande (32a) sur au moins deux niveaux différents (44a, 46a) au sein d'une plage de valeurs d'au moins 0 nF et d'au plus 40 nF.

8. Dispositif d'alimentation en énergie par induction (10a ; 10b) selon la revendication 7, **caractérisé en ce que** la capacité électrique totale de l'unité Snubber (22a) dans un premier étage (44a) des deux étages (44a, 46a) présente une valeur d'au moins 0 nF et d'au plus 20 nF.

9. Dispositif d'alimentation en énergie par induction (10a ; 10b) selon la revendication 7 ou 8, **caractérisé en ce que** la capacité électrique totale de l'unité Snubber (22a) dans un deuxième étage (46a) des deux étages (44a, 46a) présente une valeur d'au moins 15 nF et d'au plus 40 nF.

10. Système de transmission d'énergie par induction (50a ; 50b) avec un dispositif d'alimentation en énergie par induction (10a ; 10b) selon l'une des revendications précédentes, comprenant au moins une unité de mise en place (16a, 18a ; 16b, 18b) et en particulier avec une plaque de mise en place (48a ; 48b) disposée au-dessus de l'unité d'alimentation (12a ; 12b) pour l'appui de l'unité de mise en place (16a, 18a ; 16b, 18b).

11. Système de transmission d'énergie par induction (50a ; 50b) selon la revendication 10, **caractérisé en ce que** l'unité de mise en place (16a, 18a ; 16b) est conçue sous la forme d'un petit appareil ménager (52a, 54a ; 52b).

12. Système de transmission d'énergie par induction (10b) selon la revendication 10 ou 11, **caractérisé par** au moins une unité de mise en place supplémentaire (18b), qui est conçue sous la forme d'un élément de batterie de cuisine (56b).

13. Procédé d'exploitation d'un dispositif d'alimentation en énergie par induction (10a ; 10b), en particulier selon l'une des revendications 1 à 9, avec une unité d'alimentation (12a ; 12b) qui présente au moins un élément d'induction d'alimentation (14a ; 14b) pour la mise à disposition inductive d'énergie à une unité de mise en place (16a, 18a ; 16b, 18b), avec une unité d'onduleur (20a) pour l'exploitation de l'élément d'induction d'alimentation (14a ; 14b) et avec une unité Snubber (22a) affectée à l'unité d'onduleur (20a), qui présente une pluralité de condensateurs Snubber (24a, 26a, 28a, 30a), **caractérisé en ce que** dans un état de fonctionnement au moins un paramètre d'exploitation (36a) de l'unité de mise en place (16a, 18a ; 16b, 18b) est reçu sans fil par un élément de réception de données (34a) et un réglage de l'unité Snubber (22a) est adapté sur la base du paramètre d'exploitation (36a).
